(19) Europäisches Patentamt / European Patent Office / Office européen des brevets

(11) **EP 3 564 623 B1**

(12) **EUROPEAN PATENT SPECIFICATION**

(45) Date of publication and mention
of the grant of the patent:
**10.01.2024 Bulletin 2024/02**

(21) Application number: **18170756.3**

(22) Date of filing: **04.05.2018**

(51) International Patent Classification (IPC):
**G01C 21/34** (2006.01)    **G01C 21/36** (2006.01)
**G06N 5/025** (2023.01)    **G06N 20/00** (2019.01)
**G06Q 10/04** (2023.01)    **G06Q 10/10** (2023.01)
**G06Q 30/0202** (2023.01)

(52) Cooperative Patent Classification (CPC):
**G01C 21/3617; G01C 21/3484; G06N 5/025;
G06N 20/00; G06Q 10/04; G06Q 10/10;
G06Q 30/0202**

(54) **HYBRID METHOD AND SYSTEM FOR DEPARTURE TIME PREDICTION**

HYBRIDES VERFAHREN UND SYSTEM ZUR ABFAHRTSZEITVORHERSAGE

PROCÉDÉ ET SYSTÈME HYBRIDES DE PRÉDICTION D'HEURE DE DÉPART

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.11.2019 Bulletin 2019/45**

(73) Proprietor: **Bayerische Motoren Werke
Aktiengesellschaft
80809 München (DE)**

(72) Inventors:
• **Cao, Yang**
  **Chicago, IL Illinois 60601 (US)**
• **Tian, Jilei**
  **Chicago, IL Illinois 60605 (US)**

(56) References cited:
**US-A1- 2013 079 978    US-A1- 2013 252 633
US-A1- 2014 358 437    US-A1- 2016 321 551
US-A1- 2016 364 645**

## Description

## Technical Field

The present disclosure relates to a hybrid method and system for predicting departure time in automotive applications. In a preferred embodiment, there is provided a hybrid method and system for predicting departure time for passenger vehicles allowing for improved smart predictive personalized services.

## Background Art

In automotive applications, in particular for smart personalized services directed at a driver of a passenger vehicle, predicting an estimated departure time of a next trip plays a critical role, since a reliable prediction enables proactive personalized services. Proactive personalized services may include, for example, smart preconditioning (e.g. heating, cooling, or ventilation of the interior of a vehicle), smart navigation and energy management. Within the scope of this document, "predicting" a departure time denotes determining an estimated departure time based on one or more input parameters. The input parameters typically not only include a predefined, desired, or known departure time, for example provided by a user (e.g. driver) or scheduled (e.g. derived from calendar), but also include related data, such as historical data, user behavior, vehicle data, environmental data, context data, and similar. From an algorithm and proactive user experience perspective, primarily the latter case is focused on in this document. Determining a departure time may include predictive modeling in order to learn a user's habit from the related data.

In some scenarios, predictive departure time can also be detected using, for example, Bluetooth or WiFi signal strength or other sensors, detected when a user is approaching the vehicle. This, however, entails a short overhead time as such signals are only available when a user is approaching the vehicle. For smart preconditioning, more time would be required for heating or cooling, which the behavior-based approach in accordance with the present invention facilitates. In cases in which a user spends considerable amounts of time in close proximity of the vehicle (e.g. at home in a house with a garage connected to the house or nearby), this is also challenging. Behavior-based approaches offer significant advantages in such scenarios.

The rapid growth of digital services in automotive industry brings along user expectations with respect to proactive service, for example based on context and/or learnt user behavior. For example, in cold weather, users could be provided with a vehicle that can automatically be preconditioned in due time before a trip, such that an interior temperature of the vehicle has been established upon the user entering the vehicle. In another example, depending on a current (developing) traffic situation, users could be provided with a suggested alternative route before a user gets directed along a congested route and/or stuck in a traffic jam, more preferably even before the departure. In both examples, the individual preferences of a user need to be taken into account in order to provide predictive personalized services.

Such proactive personalized services very much benefit from predictive modeling of a departure time of the next trip of a user. Further, predictive modeling performance will directly impact user experience and service acceptance and engagement.

US 2011/0071881 A1 describes techniques for providing mining a life pattern of an individual, for example, by identifying places visited during the individual's daily activities. Mining the individual life pattern includes collecting location data for the individual and predicting behaviors and preferences of the individual based at least in part on a location history. The location history of the individual is represented with a sequence of geographical regions that have been visited by the individual with corresponding arrival and departure times for each region. Once the life pattern is predicted from the location history, information is recommended to the individual based at least in part on the life pattern. The techniques allow for determining patterns such as: "Among the days on which Toby visits the Empire State Building, in 90% of the time, he arrives between 8:50 a.m. to 9:10 a.m. and stays for more than three hours but less than five hours". The techniques are focused on determining durations.

US 7,610,145 B2 describes a system and method for determining the necessary departure time to allow for an on-time or desired arrival time at a particular location over a particular route based on the evaluation of historic, present, and predicted road conditions. The system and method focuses on determining a recommended departure time and requires that an arrival time and travel route must be known and be preset in advance.

US 2013/0297551 A1 describes a method and system that includes extracting event models from at least one personal planning source of a user, wherein a parameter of an event model includes event location. The method further includes periodically receiving location information of at least one mobile device of the user, storing the location information in a location log (a pattern worker module maintaining user location patterns through the location log), generating a location prediction from the extracted event models and the user location patterns (a first content worker module checking if the location prediction meets a set of content requirements), and, if the set of content requirements is satisfied, initiating content retrieval from at least one service, and pushing the content to the mobile device. The method and system are based on using information from email, calendar, or other personal data sources in order to predict a next destination. Further, a recommended departure time is determined based on the desired/estimated arrival time and expected travel duration. The method and system are not designed to predict or determine an expected departure time.

US 6,256,577 B1 describes a system that receives requests for traffic routing information from a plurality of vehicles and provides a suggested route. The suggested route is not only based on actual current conditions and historical information, but based on the application of a predictive model. The predictive model may use information about current traffic conditions and historical information to predict the actual conditions that will occur in the course of traversing a desired route to an intended destination. In this way, the system may adapt for the dynamic nature of traffic conditions. The system is not adapted to predict a likely departure time or a recommended departure time.

US 7,233,861 B2 describes a method for predicting vehicle operator destinations including receiving vehicle position data for a vehicle. The vehicle position data for a current trip is compared to vehicle position data for a previous trip to predict a destination for the vehicle. A path to the destination is suggested. Rule making and revising predictions of likely driver behavior by matching patterns with the trip in progress provide a way to anticipate the vehicle operator's destination and possible routes. The described methods appear to be strongly focused on the aspect of stay duration in determining a likely next destination.

Therefore, there is a need for a method and system for next trip departure time prediction, based on learning from user's data including historic and context data. The present disclosure is directed at providing a hybrid approach to departure time prediction.

The proposed method and system allow for leveraging with different patterns in order to predict departure time. For some of points-of-interest (POI), for example a movie theater, a user likely has an associated pattern for stay duration. The user may stay there for about 2 hours with a limited variance. This pattern can be modeled statistically from the historic data and used for predictive departure time.

For some other trips, like commuting, there is typically a temporal pattern exhibited for the departure time or the arrival time at the destination, which can be determined from historic data, optionally employing a confidence measure. For example, a use might normally leave home for work at around 7am from Monday to Friday, or normally arrive at their workplace at around 8am from Monday to Friday, thereby providing useful patterns.

Some of the trips are scheduled by departure time, or by scheduled arrival time at the destination (e.g. when a user has a meeting, which starts at 2pm).

The proposed method and system allows for taking into account a multitude of patterns and for combining the different patterns in order to infer more and a higher quality pattern. This enables very much improving the prediction of departure times and departure time patterns.

US 2016/321551 A1 describes a technology to provide a personalized computing experience for a user based on a predicted future semantic location of the user. In particular, a likely future location (or sequences of future locations) for a user may be determined, including contextual information about the future location. Using information from the current context of the user's current location with historical observations about the user and expected user events, out-of-routine events, or other lasting or ephemeral information, a prediction of one or more future semantic locations and corresponding confidences may be determined and used for providing personalized computing services to the user. The prediction may be provided to an application or service such as a personal assistant service associated with the user, or may be provided as an API to facilitate consumption of the prediction information by an application or service.

US 2014/358437 A1 relates to a computer implemented methods which includes observing, via location information generated or obtained through a user's mobile electronic device, a user traverse a preferred user route from the start location to the destination, and saving the preferred user route in relation to the user. The method may predict, based on past behavioral information for the user, a predicted start time of a future trip to the destination and may identify one or more routes from the start location to the destination.

US 2013/079978 A1 relates in general to electric vehicles and more particularly to preconditioning the interior environment of electric vehicles. The start time of a next trip is identified based on historical trip information, a weather forecast is obtained for the current location of the vehicle and an optimal preconditioning time of the vehicle is determined based on these parameters.

**Summary of Invention**

One or more of the objects specified above are substantially achieved by methods and system for modeling user and location in accordance with any one of the appended claims, which alleviate or eliminate one or more of the disadvantages described above and which realize one or more of the aforementioned advantages.

According to the invention, there is provided a method for determining a predicted departure time of a user of a vehicle, according to independent claim 1. Further embodiments of the method are provided in dependent claims 2-8.

According to the invention, there is provided a system for determining a predicted departure time of a user of a vehicle. The system comprises a control unit configured for performing the method according to the invention.

According to the invention, there is provided a vehicle comprising a system according to the invention.

**Brief Description of Drawings**

The accompanying drawings disclose exemplifying and non-limiting aspects in accordance with embodiments of the present invention.

Figure 1 shows a conceptual model of the method and system for determining departure time in accordance with embodiments of the present invention,

Figure 2 shows a map illustrating a method for determining significant locations in accordance with embodiments of the present invention,

Figure 3 shows a map illustrating clustering of locations based on user visits in accordance with embodiments of the present invention,

Figure 4 shows a flow chart of an exemplary method for creating a set of clusters of visits based on a plurality of visits in accordance with embodiments of the present invention,

Figure 5 shows a flow chart of an exemplary method for determining significant locations based on a set of clusters of visits in accordance with embodiments of the present invention, and

Figure 6 shows a flow chart of an exemplary method for determining a predicted departure time in accordance with embodiments of the present invention.

**Detailed Description**

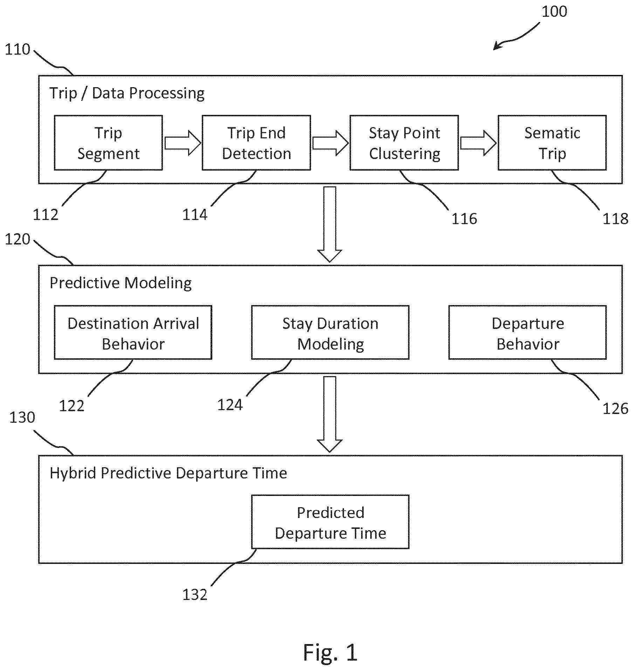

Figure 1 shows a conceptual model 100 of a method and system for determining departure time in accordance with embodiments of the present invention. The model generally includes trip/data processing 110, predictive modeling 120, and hybrid predictive departure time 130. Arrows generally indicate data and processing flow.

Trip/data processing 110 shows processing modules 112, 114, 116, and 118. Trip/data processing 110 includes segmenting (raw) data into trips (e.g. including determining start, route, and destination of a trip), identifying stay points (e.g. defining end points or destinations of trips), clustering of stay points into significant points (e.g. for finding significant locations at which many start/end points occur, without underlying geographic coordinates necessarily being identical), and post processing of trips (e.g. including semantic categorization into categories, such as home, work, mall).

In trip segment processing 112, raw trip data, for example containing a series of tracked GPS locations, is segmented into individual trips. In some embodiments, in order for tracked GPS data to be classified as belonging to a specific trip entails that the tracked GPS data are consecutively tracked and continuous within the trip (e.g. the data not containing gaps or isolated data points) and that before the start of a trip and after the end of a trip, there are stops having a duration exceeding a predetermined minimum threshold (e.g. in some applications approx. 10 minutes or longer), thereby defining stay points within a trip and, thus, segmenting a trip into trip segments. When trip data is segmented into individual trips in module 112, processing parameters may be adjusted based on the results. For example, for specific applications, a minimum duration of detecting a may be set shorter than 10 minutes or longer than 10 minutes. In this manner, a desired granularity may be achieved, so that tracked GPS data is not segmented in too many trips (e.g. the stay duration threshold being set too low) or not being segmented sufficiently (e.g. the stay duration threshold being set too high).

Trip end detection 114 determines whether an end point of a trip is a stay point. As indicated above, a stay point must exhibit a stay duration exceeding a predefined threshold. Further, detection of stay points may additionally or alternatively be based on detection of a vehicle parking signal (e.g. ignition off, control and/or head units go into sleep mode or power down) or detection of a corresponding connection. Further, detection of stay points may additionally or alternatively be based on an estimated speed of the vehicle, determined, for example based on a linear regression algorithm, becoming and staying zero.

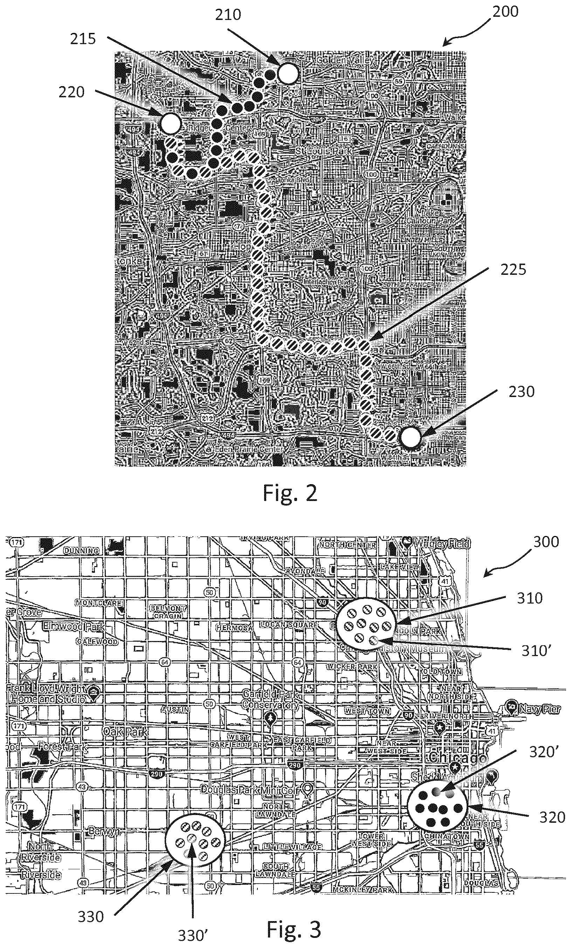

Stay point clustering 116 clusters stay points into clusters of similar or identical points. This process is described in more detail below with respect to figure 3. Generally, clustering of stay points serves to identify significant locations, which a user or users frequently visit(s). However, a parking spot or position on each visit will typically not be identical but merely show some similarity, for example with respect to relative location (e.g. within a certain radius). As a general rule, stay points classified as belonging to a single significant location should be close to each without the necessity of being identical. Being close to one another may be determined by a distance between two points being below a predefined threshold (e.g. 500m).

Semantic trip module 118 determines semantic properties of a given trip, location, and route based on processed data including significant locations and user context/preferences. In this post processing, for example, a semantic categorization of a location can be made, semantically identifying a location as "home", "work", "shopping", "gym", etc. The same can be done for trips or routes, thereby determining semantically identical trips, including the commute from home to work or vice versa, regularly taken shopping trips, etc.

Figure 2 shows a map 200 illustrating a process for determining significant locations in accordance with embodiments of the present invention. The described process is an exemplary process for determining significant locations in accordance with the present invention. It is noted that other processes for determining significant locations can be employed. Map 200 illustrates two trips. The first trip starts at location 210 and ends at location 220, with intermediate tracked positions denoted by locations 215. The second trip starts at location 220 and ends at location 230, with intermediate tracked positions denoted by locations 225. It is noted that within each trip, tracked data are continuous in both spatial and time dimension. For illustration purposes, only selected intermediate positions are shown. The granularity of the tracked data (e.g. substantially continuously or taken at intervals) may be adapted as desired (e.g. based on regular intervals, a speed of the vehicle, or other factors). Between the first (210, 220) and second (220, 230) trips, a time gap was recorded, thereby rendering location 220 a stay point. As described above, a stay point can be determined based on, for example, a stay duration exceeding a predetermined threshold (e.g. 10 minutes), an occurrence of a signal indicative of the vehicle being parked, or a signal indicative of a speed of the car becoming and remaining substantially zero.

As can be seen from figure 2, some intermediate locations 215 and 225 of the first and second trips overlap. The method of illustration shows the intermediate locations 215, 225 in alternating fashion, although the tracked and processed data are identical to those of the remaining portions of both trips (210, 220; 220,230), where no overlap is registered.

Figure 3 shows a map 300 illustrating clustering of locations 310, 320, 330 based on user visits 310', 320', 330' in accordance with embodiments of the present invention. Clustering determines significant locations, for example locations 310, 320, 330, which constitute places frequently visited by a user. One issue with determining significant locations lies in the fact that a user may often visit a location (e.g. a mall, movie theater), but each time generate a different geolocation (i.e. GPS coordinates) due to the parking place not being identical on each visit. This is illustrated by visits 310', 320', 330', multiple of which are registered at each signification location 310, 320, 330. In order to determine, whether a visit 310', 320', 330' can be associated with a location 310, 320, 330, a distance measure is employed, for visits (or stay points) classified as belonging to one significant location, they should be close to each other without geolocations and/or coordinates necessarily being identical.

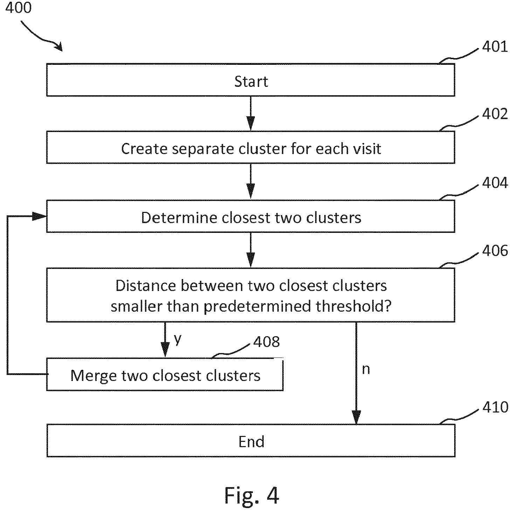

In accordance with embodiments of the present inventions, a heuristic based agglomerative clustering algorithm (hierarchical approach) has been devised in order to efficiently and reliability perform clustering of visits to locations. The method 400, see figure 4, according to embodiments of the present inventions includes the following steps.

Figure 4 shows a flow chart of an exemplary method 400 for creating a set of clusters of visits based on a plurality of visits in accordance with embodiments of the present invention. Method 400 starts at step 401. In step 402, a separate cluster for each visit (or stay point; these terms are used interchangeably) is created, thus providing an initial set containing all visits, with each visit being associated with a single cluster of its own. This may be performed as an initial step or as a general initialization. Each cluster, initially, includes the geolocation (e.g. GPS coordinates) of the (sole) visit. Generally, the size of the region thus processed can be adapted as desired, for example covering the region within the city limits of a city or parts thereof, a county, a region encompassing more than one county, one or more states, etc. Whatever region is best suited for a given task may be predetermined, be determined while processing (e.g. disregarding small sets of outliers), or in any other sensible manner. In step 404, the closest two clusters are determined, based on the set of clusters determined in step 402. Here, common or specialized distance measures may be employed (e.g. qualitative, quantitative). In step 406, it is determined whether the two clusters determined in step 404 can be merged into one cluster. This is achieved by determining whether the distance between any two points in the two clusters is smaller than a predetermined threshold value (e.g. 100m), and by merging the two clusters into one. The threshold can be determined empirically or heuristically. Smaller values lead to cluster being split (e.g. several clusters in a larger shopping mall or at an airport). Larger values can merge the details, similar to geofencing. In step 408, if the clusters can be merged, they are merged and the process iterates back to step 404. If the clusters cannot be merged, the process ends at step 410. The merging may be achieved by registering all visits from both clusters in a newly created cluster, which includes, as the cluster location, a mean value determined based on the geolocations of all visits thus registered, and by determining the size of the cluster as encompassing all visits thus registered. In accordance with embodiments of the present application, hierarchical clustering is used. The clusters previously determined to be merged, are discarded. The steps 404,406, and 408 are repeated in an iteration, until no more clusters exist, which can be merged. This can be determined by a distance measure indicating whether the distance between any two points in the two clusters is smaller than a predetermined threshold value. If the distance is larger than the predetermined threshold, the iteration is finished and a set of clusters, such as shown in figure 3, is provided. The method ends at step 410.

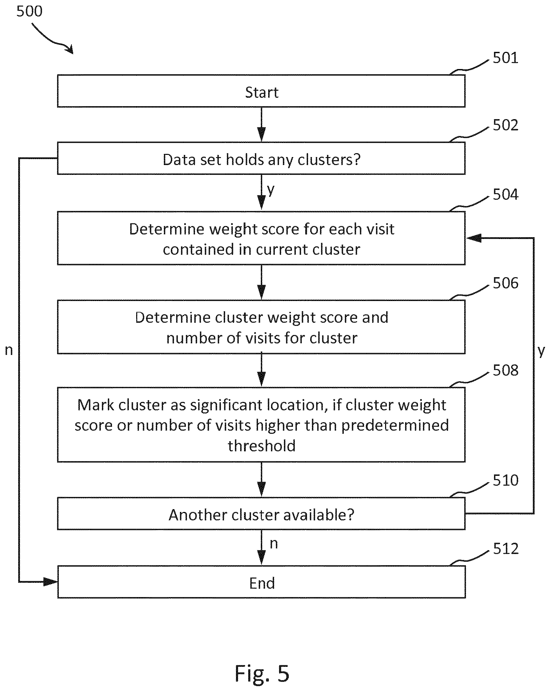

Figure 5 shows a flow chart of an exemplary method 500 for determining significant locations based on a set of clusters 310, 320, 330 of visits 310', 320', 330' (see figure 3) in accordance with embodiments of the present invention. Method 500 may be employed in order to determine whether a found cluster from the set of clusters determined as described above, can be classified as a significant location. Method 500 starts at step 501. In step 502, it is determined whether the set of clusters includes a (or another) cluster. If another cluster is available, the method continues at step 504, otherwise the method ends (see step 512). In step 504, a weight score is determined for each visit in the cluster. In embodiments according to the present invention, the weight score is determined based on the duration of the visit. Here, a monotonous sigmoid function is applied, rendering output values, for example, between 0 and 1.0. In some embodiments, the weight is set substantially at 1.0 (i.e. approaches the value 1.0 asymptotically), when the duration of the visit reaches 2 hours or more. In this manner, long stay durations do not overly impact the finding of significant locations. In step 506, the weight of the cluster is defined as sum of the weights of all visits associated with the cluster. Optionally, a logarithmic decay function can be applied to weights of clusters which have no visits for a predetermined amount of time (e.g. 2 weeks), in this manner, clusters that are not visited for an extended amount of time will be disregarded (e.g. due to their weight becoming less and less over time). This is useful, for example, for venues that cease to exist (e.g. restaurants, clubs, stores), or for venues that are open for business only during certain periods of time (e.g. festivals, ski resorts, outdoor pools). In step 508, a cluster can be marked as a significant location (e.g. a frequent destination) if the number of visits is higher than a predetermined (visit) threshold value (e.g. 2 or more times) and/or if the weight score is higher than a predetermined (weight) threshold value (e.g. 0.6), depending on the normalization range (e.g. [0 to 1.0]). In step 510, it is determined whether another cluster is available and, if yes, the process iterates back to step 504. Otherwise the process ends at step 512.

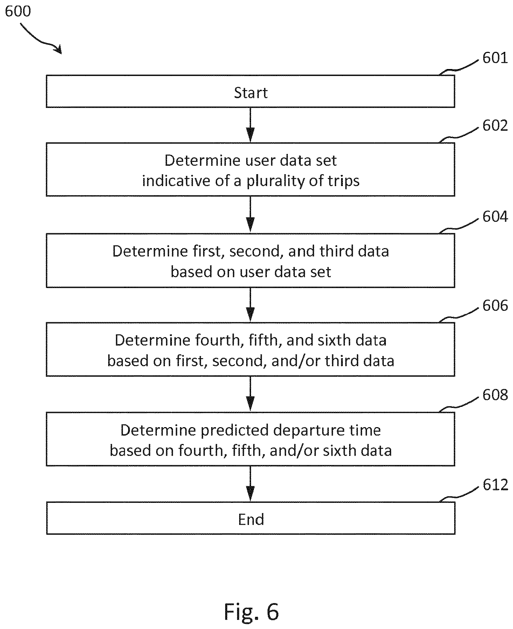

Figure 6 shows a flow chart of an exemplary method 600 for determining a predicted departure time in accordance with embodiments of the present invention. Method 600 starts at step 601. In step 602, a user data set indicative of a plurality of trips made by a user is determined. In embodiments, the further processing may additionally be based on a crowd data set indicative of a plurality of trips made by a plurality of users, in order to incorporate crowd data (e.g. trips frequently made by many users, rendering a reliable overview of travel times, destinations, stay durations, etc.). In step 604, based on the user data set indicative of a plurality of trips made by the user, first data indicative of trip segment information, second data indicative of trip destinations, and third data indicative of semantic trip properties, are determined. In step 606, based on the first, second, and/or third data, fourth data indicative of destination arrival behavior, fifth data indicative of a stay duration at a destination, and sixth data indicative of a departure behavior, are determined. And in step 608, based on the fourth, fifth, and/or sixth data, the predicted departure time of the user is determined. Aspects of each of these steps are detailed below.

Generally a destination for the next trip is determined based on contextual association rule mining. Typically, if a user frequently travels to a given destination under certain context (e.g. time of day and day of week), then this behavior can be predicted with high confidence. Contextual association rule mining is applied in order to find frequent co-occurring associations among a collection of items in certain context. Contextual association rule mining is the extension of traditional association rule mining.

One example of a mined contextual rule is: {(Is Monday: Yes), (time range: AM6:30-7:00)} => Behavior: departing from Home and arriving at Railway station at 8:00. In a first step, the contextual data are generated from raw data as contextual trips: {Weekday, time, Start -> Destination}. If there is no destination during a given time range, the data are generated as: {weekday, time range, no trips}. For the days that have associated geolocation data (e.g. GPS data), an FP-Tree based mining algorithm is applied in order to find all frequent contextual pattern as: {Weekday, time range, Start - Destination}. For each mined pattern, the confidence is defined under current the context. The probability that user will travel to the target destination can be calculated as:

$$conf = \frac{num(pattern)}{num(pattern) + num(otheraction)}$$, with

*num(otheraction)* denoting the number of no trips or trips to other destination under the same context. If *conf* ≥ 0.5 and *num(pattern)* ≥ 2, the contextual pattern is defined as the valid rules.

In the following, several examples are provided in order to illustrate the contextual association rule mining. Assuming a user's trip data on Mon as follows:

- From home to train station at 6:45am; from train station to home at 5:45pm. The corresponding contextual data are: {Monday, 6:45am, Home->Train_station}; {Monday, 5:45pm, Train_station->Home}
- From home to train station at 6:51am; from train station to home at 6:42pm. The corresponding contextual data are: {Monday,6:51am, Home->Train_Station}; {Monday,5:30-6:00pm, no_trip}; {Monday,6:42pm, Train_station->Home}
- From home to train station at 6:55am; from train station to restaurant at 5:42pm. The corresponding contextual data are: {Monday, 6:55 am, Home->Train_Station}; {Monday, 5:45pm, Train_station->Restaurant}

The mined rules, then, are:

- For morning rules: {Monday, 6:30-6:50am, Home->Train_Station}, support is 3, confidence =1

- For the evening rules candidates: {Monday,5:30-6:00pm, Train_station->Home}, the support is 1, confidence=0.33. Support and confidence are lower than the threshold, this entry is discarded.

Predicted departure time = Predicted destination arrival time - trip duration from estimated time of arrival (ETA).

With respect to departure time prediction there are two possibilities. On one hand, if a user, frequently and reliably, leaves a destination at a particular time under a specific context (e.g. day of week and morning/afternoon/evening), this enables a prediction of this event with high confidence and a contextual departure time rule can be learnt for this situation. On the other hand, if a user, frequently and reliably, stays at a given location for a similar duration under a certain context (e.g. day of week and morning/afternoon/evening), this enables a prediction of the leaving time under that context based on a time of arrival from the previous trip plus the predicted duration of the stay. In some embodiments, a contextual duration model or contextual regression function can be applied in order to adapt to the respective context. A context may be time of day or day of week, or a holiday from temporal perspective. With respect to the spatial domain, it can be a point of interest (POI; e.g. an airport, restaurant, hospital, shopping mall, gas station), home, work, etc. The more relevant the context is, the more constraints are applied in order to improve the predictability. For example, a user may typically stay around 10 minutes at a gas station, about 30 minutes at a fast food restaurant, and more than 2 hours at a high-class restaurant.

Contextual association rule mining can be applied to learn the contextual rules. Some exemplary mined contextual rules may be learnt as follows:

- {(Is Monday: Yes), (car last parking location is home: Yes)} => Departure time is 7:00am
- {(Is Sunday: Yes), (is Afternoon: Yes), (car last parking location is Costco: Yes)} => Stay Duration: 30 minutes

An exemplary learning algorithm for departure time rules in accordance with embodiments of the present invention is as follows. For each learned destination the following steps are performed. All departure data associated with the start of a learned destination are gathered. Hierarchical clustering is employed in order to find clusters of departure times. A suitable parameter may be defined as a maximum time difference inside the cluster (e.g. 30 minutes). Then, for each cluster, if the number of items in cluster is bigger than a predetermined support threshold, the corresponding context is defined as {weekday} and {weekday, morning/afternoon/evening}

$$conf = \frac{size(cluster)}{action\_num(context)}$$

, with action_num(context) being the number of events that meet the requirements of the context. If conf = Threshold, a rule is learnt. When calculating the confidence, {weekday} and type of context is used first. If the confidence meets the requirements, the confidence for the second type of context will not be calculated. A quality score for the rule can subsequently be estimates as quality = qf (supp, conf). In one example,

$$qf(supp, conf) = \frac{conf}{1+\exp(-\alpha * supp)}$$

. The current threshold for support is 3, for confidence is 0.6.

In the following, several examples are provided in order to illustrate the algorithm. Assuming that the departure and arrival time for a learnt destination SP1 are:

- {Wednesday: 13:00->14:10}, {Wednesday: 13:05->15:00},

  {Wednesday: 12:50->14:25}, {Wednesday: 12:10->13:02},
  {Wednesday: 13:10-> 14:00}

- {Tuesday: 13:00->14:00}, {Thursday: 14:00->15:00}, {Friday: 17:00-17:30}

After clustering, the valid clusters are {Wednesday: 13:00,13:05,12:55,13:10}, the support number is 4, the corresponding contexts are {Wednesday} and {Wednesday, Afternoon}. For the context {Wednesday}, the confidence=4/5=0.8 is bigger than the threshold (see above). The learnt departure rules are {Wednesday, SP1} -> Mean departure time is 13:03, support=4, confidence=0.8, quality=0.585 (here, $\alpha$ = 0.25).

The learning destination duration model includes two different models for the duration estimation, a duration model and a function-based model. The duration model generally includes steps similar to those of the departure time rules, namely changing the elements in the hierarchical clustering from departure time to stay duration. The learned rules are similar to the departure time rules, including support, confidence, and quality score.

The function-based model is based on duration = f dur(context). A general machine learning regression model can be applied, for example logistic regression. The user history data is converted to $\psi$ = {context_i, dur_i}_{i=1...N}. After the model is learnt, the error for training data is $\psi$ = {context_i, |dur_i - f dur(context_i)|}_{i=1...N}. An error model error can be learnt from the data using a regression model, in which case a quality function can be built based on the error function. In one example,

$$quality(context) = \frac{\beta}{error(context)+\beta}$$

, with $\beta$ being a hyper-parameter that can be set or estimated.

Subsequently, the results are fused into the hybrid departure time prediction. The backend maps the geolocation (e.g. GPS) to a learnt destination. If the current location is the same or close to the start location of a predicted destination rule, and the arrival time of the predicted rules is reasonable close to a parking time, the predicted arrival time can be derived from the predicted rules. Then the predicted departure time $Time_1$ can be calculated using the time of arrival minus ETA. $quality_1$ is the quality of the matched rule. If there is no matched rule, $Time_1$ = None, $quality_1$ = 0. Then, the current context is determined, and it is checked, whether there is a departure time rule that matches the context. If a rule is found, the predicted departure time $Time_2$ is the mean departure time of the rules and $quality_2$ is the quality of the matched rule. If there is no matched rule, $Time_2$ = None, $quality_2$ = 0. Further, it is determined whether there exists a duration rule that matches the current context. If a rule is found, the predicted departure time $Time_3$ is the arriving time plus mean duration and $quality_3$ is the quality of the matched rule. If no rule can be found, the duration is estimated using the function $fdur$ (see above). The $quality_3$ score is estimated using a quality function. If the quality score is lower, $Time_3$ = None, $quality_3$ = 0, otherwise $Time_3$ = $fdur$ + $Time_{arrival}$, $quality_3$ = 0.

There are several options for combining the results from the inputs ($Time_1$, $quality_1$), ($Time_2$, $quality_2$), and ($Time_3$, $quality_3$). One option includes determining the highest quality score $quality_i$. Then $Time_i$ is the predicted time. Another option is to use a linear combination of different inputs:

$$Time_{final} = \frac{1}{w_1 + w_2 + w_3} * \sum_{i=1}^{3} w_i * Time_i .$$

There are several ways to define the weight $w_i$. For example, $w_i = quality_i$, or

$$w_i = \begin{cases} e^{quality_i} & if\ quality_i > 0 \\ 0 & if\ quality_i = 0 \end{cases}.$$

In accordance with embodiments of the present invention, when a user parks their vehicle, the system receives the parking geolocation (e.g. GPS coordinates) and the time of parking. If the user predefines the departure time of a subsequent trip (e.g. there is a scheduled trip), the known departure time is returned. Otherwise, if the user predefines a scheduled arriving time at the next destination (e.g. defined in calendar), a predicted departure time can be calculated using arriving time and ETA. Yet otherwise, the predicted time is calculated using the above-described hybrid departure time prediction.

## Claims

1. Method for determining a predicted departure time of a user of a vehicle for automatically preconditioning the vehicle before a trip, the method comprising:

    determining, based on a user data set of the user of the vehicle indicative of a plurality of trips made by the user:

      - first data indicative of trip segment information, wherein the trip segment information includes one or more of a starting location, one or more waypoints along a route, and a destination location,
      - second data indicative of trip destinations, and
      - third data indicative of semantic trip properties, wherein the semantic trip properties include one or more of a trip categorization, trip parameters, and semantic properties of a respective start and/or destination of a trip,

    determining, based on the first, second, and third data:

      - fourth data indicative of destination arrival behavior,
      - fifth data indicative of a stay duration at a destination, and
      - sixth data indicative of a departure behavior,

    determining, based on the fourth, fifth, and sixth data, the predicted departure time of the user, and
    automatically preconditioning the vehicle based on the predicted departure time of the user, wherein the preconditioning includes heating, cooling or ventilation of an interior of the vehicle.

2. Method of the preceding claim, wherein the plurality of trips made by a user determined based on the user data is represented in the form of a plurality of entries: {Weekday, time, Start -> Destination}.

3. Method of any one of the preceding claims, wherein determining the predicted departure time includes one of:

    determining a time corresponding to the predicted departure time; and
    determining an arrival time and a stay duration and determining the predicted departure time from the arrival time and the stay duration.

4. Method of any one of the preceding claims, wherein determining the predicted departure time of the user further comprises:
    determining one or more pairs of predicted departure times and associated reliability indicators, wherein determining the predicted departure time of the user is further based on the one or more pairs of predicted departure times and associated reliability indicators.

5. The method of any one of the preceding claims, further comprising:

    determining, based on one or more of the user data set, the first data, and the second data, a plurality of destinations;
    determining a plurality of significant locations indicative of a cluster of destinations based on the plurality of destinations.

6. Method of the preceding claim, wherein the plurality of significant locations is determined based on a hierarchical clustering algorithm.

7. Method of any one of the preceding claims, wherein:

the fourth data indicative of destination arrival behavior include a destination arrival behavior associated with one or more visits of the user at corresponding locations;
the fifth data indicative of a stay duration at a destination include an average or
median stay duration of one or more stays of the user, and
the sixth data indicative of a departure behavior include a departure behavior associated with one or more visits of the user at corresponding locations.

8. Method of the preceding claim, wherein the first, second, and/or third data are further determined based on a crowd data set indicative of a plurality of trips made by a plurality of users.

9. System for determining a predicted departure time of a user of a vehicle for automatically preconditioning the vehicle before a trip, the system comprising a control unit configured for performing the method of any one of the preceding claims.

10. Vehicle comprising a system according to the preceding claim.


**Patentansprüche**

1. Verfahren zum Bestimmen einer vorhergesagten Abfahrtszeit eines Benutzers eines Fahrzeugs zum automatischen Vorklimatisieren des Fahrzeugs vor einer Fahrt, wobei das Verfahren umfasst:

auf Grundlage eines Benutzerdatensatzes des Benutzers des Fahrzeugs, der eine Vielzahl durch den Benutzer unternommener Fahrten angibt, erfolgendes Bestimmen:

- erster Daten, die Fahrtsegmentinformationen angeben, wobei die Fahrtsegmentinformationen einen Startort und/oder einen oder mehrere Wegpunkte entlang einer Route und/oder einen Zielort beinhalten,
- zweiter Daten, die Fahrtziele angeben, und
- dritter Daten, die semantische Fahrteneigenschaften angeben, wobei die semantischen Fahrteneigenschaften eine Fahrtkategorisierung und/oder Fahrtparameter und/oder semantische Eigenschaften eines jeweiligen Starts und/oder Ziels einer Fahrt beinhalten,

auf Grundlage der ersten, zweiten und dritten Daten erfolgendes Bestimmen:

- vierter Daten, die ein Zielankunftsverhalten angeben,
- fünfter Daten, die eine Aufenthaltsdauer an einem Ziel angeben, und
- sechster Daten, die ein Abfahrtsverhalten angeben, auf Grundlage der vierten, fünften und sechsten Daten erfolgendes Bestimmen der vorhergesagten Abfahrtszeit des Benutzers und

automatisches Vorklimatisieren des Fahrzeugs auf Grundlage der vorhergesagten Abfahrtszeit des Benutzers, wobei das Vorklimatisieren Heizen, Kühlen oder Belüften eines Innenraums des Fahrzeugs umfasst.

2. Verfahren nach dem vorhergehenden Anspruch, wobei die auf Grundlage der Benutzerdaten bestimmte Vielzahl durch einen Benutzer unternommener Fahrten in Form einer Vielzahl von Einträgen dargestellt wird:
{Wochentag, Uhrzeit, Start -> Ziel}.

3. Verfahren nach einem der vorhergehenden Ansprüche, wobei das Bestimmen der vorhergesagten Abfahrtszeit eines der Folgenden beinhaltet:

Bestimmen einer Zeit, die der vorhergesagten Abfahrtszeit entspricht; und
Bestimmen einer Ankunftszeit und einer Aufenthaltsdauer und Bestimmen der vorhergesagten Abfahrtszeit aus der Ankunftszeit und der Aufenthaltsdauer.

4. Verfahren nach einem der vorhergehenden Ansprüche, wobei das Bestimmen der vorhergesagten Abfahrtszeit des Benutzers ferner umfasst:
Bestimmen eines oder mehrerer Paare aus vorhergesagten Abfahrtszeiten und zugehörigen Zuverlässigkeitsindikatoren, wobei das Bestimmen der vorhergesagten Abfahrtszeit des Benutzers ferner auf dem einen oder den mehreren Paaren aus vorhergesagten Abfahrtszeiten und zugehörigen Zuverlässigkeitsindikatoren basiert.

5. Verfahren nach einem der vorhergehenden Ansprüche, ferner umfassend:

auf Grundlage des Benutzerdatensatzes und/oder der ersten Daten und/oder der zweiten Daten erfolgendes Bestimmen einer Vielzahl von Zielen;
auf Grundlage der Vielzahl von Zielen erfolgendes Bestimmen einer Vielzahl signifikanter Orte, die einen Cluster von Zielen angeben.

**6.** Verfahren nach dem vorhergehenden Anspruch, wobei die Vielzahl signifikanter Orte auf Grundlage eines hierarchischen Clusterbildungsalgorithmus bestimmt wird.

**7.** Verfahren nach einem der vorhergehenden Ansprüche, wobei:

die vierten Daten, die ein Zielankunftsverhalten angeben, ein Zielankunftsverhalten in Zusammenhang mit einem oder mehreren Besuchen des Benutzers an entsprechenden Orten beinhalten;
die fünften Daten, die eine Aufenthaltsdauer an einem Ziel angeben, eine durchschnittliche oder mittlere Aufenthaltsdauer eines oder mehrerer Aufenthalte des Benutzers beinhalten und
die sechsten Daten, die ein Abfahrtsverhalten angeben, ein Abfahrtsverhalten in Zusammenhang mit einem oder mehreren Besuchen des Benutzers an entsprechenden Orten beinhalten.

**8.** Verfahren nach dem vorhergehenden Anspruch, wobei die ersten, zweiten und/oder dritten Daten ferner auf Grundlage eines Mengendatensatzes bestimmt werden, der eine Vielzahl von Fahrten angibt, die von einer Vielzahl von Benutzern unternommen wurden.

**9.** System zum Bestimmen einer vorhergesagten Abfahrtszeit eines Benutzers eines Fahrzeugs zum automatischen Vorklimatisieren des Fahrzeugs vor einer Fahrt, wobei das System eine Steuereinheit umfasst, die zum Durchführen des Verfahrens nach einem der vorhergehenden Ansprüche konfiguriert ist.

**10.** Fahrzeug, das ein System nach dem vorhergehenden Anspruch umfasst.

## Revendications

**1.** Procédé de détermination d'une heure de départ prédite d'un utilisateur d'un véhicule pour préconditionner automatiquement le véhicule avant un trajet, le procédé comprenant :

la détermination, sur la base d'un jeu de données d'utilisateur de l'utilisateur du véhicule indiquant une pluralité de trajets effectués par l'utilisateur :

- de premières données indiquant des informations de segment de trajet, dans lequel les informations de segment de trajet comprennent un ou plusieurs éléments parmi un lieu de départ, un ou plusieurs points de cheminement le long d'un itinéraire, et un lieu de destination,
- de deuxièmes données indiquant des destinations de trajet, et
- de troisièmes données indiquant des propriétés sémantiques de trajet, dans lequel les propriétés sémantiques de trajet comprennent un ou plusieurs éléments parmi une catégorisation de trajet, des paramètres de trajet, et des propriétés sémantiques d'un départ et/ou d'une destination respectifs d'un trajet, la détermination, sur la base des premières, deuxièmes et troisièmes données :
- de quatrièmes données un comportement d'arrivée à destination,
- de cinquièmes données indiquant une durée de séjour à une destination, et
- de sixièmes données indiquant un comportement de départ,

la détermination, sur la base des quatrièmes, cinquièmes et sixièmes données, de l'heure de départ prédite de l'utilisateur, et
le préconditionnement automatique du véhicule sur la base de l'heure de départ prédite de l'utilisateur, dans lequel le préconditionnement comprend le chauffage, le refroidissement ou la ventilation d'un intérieur du véhicule.

**2.** Procédé selon la revendication précédente, dans lequel la pluralité de trajets effectués par un utilisateur déterminée sur la base des données d'utilisateur est représentée sous la forme d'une pluralité d'entrées : {Jour de la semaine, heure, Départ-> Destination}.

**3.** Procédé selon l'une quelconque des revendications précédentes, dans lequel la détermination de l'heure de départ prédite comprend l'une des actions suivantes :

la détermination d'une heure correspondant à l'heure de départ prédite ; et
la détermination d'une heure d'arrivée et d'une durée de séjour et la détermination de l'heure de départ prédite à partir de l'heure d'arrivée et de la durée de séjour.

**4.** Procédé selon l'une quelconque des revendications précédentes, dans lequel la détermination de l'heure de départ prédite de l'utilisateur comprend en outre : la détermination d'une ou plusieurs paires d'heures de départ prédites et d'indicateurs de fiabilité associés, dans lequel la détermination de l'heure de départ prédite de l'utilisateur est en outre basée sur la ou les paires d'heures de départ prédites et d'indicateurs de fiabilité associés.

**5.** Procédé selon l'une quelconque des revendications précédentes, comprenant en outre :

la détermination, sur la base du ou des jeux de données d'utilisateur, des premières données, et des deuxièmes données, d'une pluralité de destinations ;
la détermination d'une pluralité de lieux significatifs indiquant un groupe de destinations sur la base de la pluralité de destinations.

**6.** Procédé selon la revendication précédente, dans lequel la pluralité de lieux significatifs est déterminée sur la base d'un algorithme de regroupement hiérarchique.

**7.** Procédé selon l'une quelconque des revendications précédentes, dans lequel :

les quatrièmes données indiquant un comportement d'arrivée à destination comprennent un comportement d'arrivée à destination associé à une ou plusieurs visites de l'utilisateur à des lieux correspondants ;
les cinquièmes données indiquant une durée de séjour à une destination comprennent une durée de séjour moyenne ou médiane d'un ou plusieurs séjours de l'utilisateur, et
les sixièmes données indiquant un comportement de départ comprennent un comportement de départ associé à une ou plusieurs visites de l'utilisateur à des lieux correspondants.

**8.** Procédé selon la revendication précédente, dans lequel les premières, deuxièmes, et/ou troisièmes données sont en outre déterminées sur la base d'un jeu de données collectif indiquant une pluralité de trajets effectués par une pluralité d'utilisateurs.

**9.** Système de détermination d'une heure de départ prévue d'un utilisateur d'un véhicule pour préconditionner automatiquement le véhicule avant un trajet, le système comprenant une unité de commande configurée pour exécuter le procédé selon l'une quelconque des revendications précédentes.

**10.** Véhicule comprenant un système selon la revendication précédente.

Fig. 1

Fig. 2

Fig. 3

400

401

Start

402

Create separate cluster for each visit

404

Determine closest two clusters

406

Distance between two closest clusters
smaller than predetermined threshold?

y

408

Merge two closest clusters

n

410

End

Fig. 4

500

501
Start

502
Data set holds any clusters?

y

504
Determine weight score for each visit
contained in current cluster

506
Determine cluster weight score and
number of visits for cluster

508
Mark cluster as significant location, if cluster weight
score or number of visits higher than predetermined
threshold

510
Another cluster available?

n

y

n

512
End

Fig. 5

600

601

| Start |
|---|

602

| Determine user data set
indicative of a plurality of trips |
|---|

604

| Determine first, second, and third data
based on user data set |
|---|

606

| Determine fourth, fifth, and sixth data
based on first, second, and/or third data |
|---|

608

| Determine predicted departure time
based on fourth, fifth, and/or sixth data |
|---|

612

| End |
|---|

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110071881 A1
- US 7610145 B2
- US 20130297551 A1
- US 6256577 B1
- US 7233861 B2
- US 2016321551 A1
- US 2014358437 A1
- US 2013079978 A1